# EUROPEAN PATENT APPLICATION

(11) **EP 4 656 905 A1**
(43) Date of publication of application: **03.12.2025**
(21) Application number: 24919616.3
(22) Date of filing: 24.05.2024
(51) Int. Cl.: F16H 3/00, F16H 57/02, F16H 57/023, B60K 6/24, B60K 6/26, B60K 6/36, H02K 7/116

(54) **GEARBOX, HYBRID POWER SYSTEM, AND AUTOMOBILE**

(30) Priority: 25.01.2024 CN 202410104461
(71) Applicant: Chery Automobile Co., Ltd., Wuhu, Anhui 241006 (CN)
(72) Inventor: ZHANG, Hengxian, Wuhu, Anhui 241006 (CN); LI, Shuangluan, Wuhu, Anhui 241006 (CN); YAO, Wangfei, Wuhu, Anhui 241006 (CN)
(74) Representative: Yang, Shu
(86) International application number: PCT/CN2024/095245
(87) International publication number: WO 2025/156529

(57) **Abstract**

A gearbox, a hybrid power system, and an automobile. The gearbox comprises: a first main shaft (11), a second main shaft (12), a first clutch assembly (21), a second clutch assembly (22), a first gear train (31), and a second gear train (32). The first main shaft (11) and the second main shaft (12) are arranged in parallel; the first main shaft (11) is configured to be transmittingly connected to an electric motor; and the second main shaft (12) is configured to be transmittingly connected to wheels. The first clutch assembly (21) connects with the first main shaft (11) and is transmittingly connected to an engine by means of the first gear train (31); the second clutch assembly (22) connects with the first main shaft (11) and is transmittingly connected to the second main shaft (12) by means of the second gear train (32).

## Description

The present disclosure claims priority to Chinese Patent Application No. 202410104461.7, filed on January 25, 2024 and entitled "GEARBOX, HYBRID POWER SYSTEM AND VEHICLE", the content of which is incorporated herein by reference in its entirety.

### TECHNICAL FIELD

The present disclosure relates to the field of vehicle technology, and in particular, to a gearbox, a hybrid power system and a vehicle.

### BACKGROUND

Fossil fuels (such as gasoline and diesel) are primarily used in traditional vehicles to power their engines, and the exhaust emitted from these engines causes environmental pollution. Therefore, it is imperative to use new-energy vehicles, which use pollution-free new energy sources, such as electricity, to replace fossil fuels as power sources. The new-energy vehicles are the trend for the development. Hybrid vehicles are a major type of new-energy vehicle.

In related art, the hybrid vehicle uses a hybrid power system for driving. A hybrid power system typically includes an engine, an electric motor, a first main shaft, and a second main shaft. The shaft of the electric motor is drivingly connected to the first main shaft. The first main shaft is drivingly connected to the second main shaft via a gear system. The second main shaft is configured to be drivingly connected to the wheels. The shaft of the electric motor is also drivingly connected to the output shaft of the engine.

When the hybrid system is operating, one portion of the power of the engine drives the motor to generate electricity, and the other portion drives the wheels. In this way, the power of the engine cannot be fully utilized for power generation, which affects the efficiency of power generation. Furthermore, in the single-motor drive mode, the power output by the motor is transmitted to the engine and drags the engine to rotate, which causes energy loss.

### SUMMARY

Embodiments of the present disclosure provide a gearbox, a hybrid power system and a vehicle, which can improve the problem of energy loss caused by dragging transmission components in pure generator mode and single-motor mode. The technical solutions are as follows.

In a first aspect, embodiments of the present disclosure provide a gearbox. The gearbox includes a first main shaft, a second main shaft, a first clutch assembly, a second clutch assembly, a first gear train, and a second gear train; wherein the first main shaft is parallel to the second main shaft, the first main shaft is configured to be drivingly connected to a motor, and the second main shaft is configured to be drivingly connected to wheels; one end of the first gear train is drivingly connected to an engine, and the other end of the first gear train is drivingly connected to the first main shaft via the first clutch assembly; and one end of the second gear train is drivingly connected to the first main shaft via the second clutch assembly, and the other end of the second gear train is drivingly connected to the second main shaft.

In some embodiments, the first clutch assembly includes a first annular steel plate, a first clutch plate, a first clutch collar, and a first hollow shaft, wherein an outer circumferential wall of the first annular steel plate is connected to an inner wall of the first clutch collar , the first clutch plate is axially movably sleeved over the first hollow shaft, the first clutch plate is circumferentially locked to the first hollow shaft, the first hollow shaft is movably sleeved over the first main shaft, the first clutch collar is coaxially connected to the first main shaft, an input gear of the first gear train is configured to be coaxially connected to an output shaft of an engine, and an output gear of the first gear train is fixedly sleeved over the first hollow shaft; and the second clutch assembly includes a second annular steel plate, a second clutch plate, a second clutch collar , and a second hollow shaft, wherein an outer circumferential wall of the second annular steel plate is connected to an inner wall of the second clutch collar, the second clutch plate is axially movably sleeved over the second hollow shaft, the second clutch plate is circumferentially locked to the second hollow shaft, the second hollow shaft is movably sleeved over the first main shaft, the second clutch collar is coaxially connected to the first main shaft, an input gear of the second gear train is fixedly sleeved over the second hollow shaft, and an output gear of the second gear train is fixedly sleeved over the second main shaft.

In some embodiments, the gearbox further includes a third main shaft, a third clutch assembly, and a third gear train, the third main shaft being parallel to the first main shaft; wherein the third clutch assembly includes a third annular steel plate, a third clutch plate, a third clutch collar , and a third hollow shaft, wherein an outer circumferential wall of the third annular steel plate is connected to an inner wall of the third clutch collar, the third clutch plate is axially movably sleeved over the third hollow shaft, the third clutch plate is circumferentially locked to the third hollow shaft, the third hollow shaft is movably sleeved over the third main shaft, the third clutch collar is coaxially connected to the third main shaft, an input gear of the third gear train is fixedly sleeved over the third hollow shaft, and an output gear of the third gear train is fixedly sleeved over the second main shaft.

In some embodiments, the gearbox further includes a fourth main shaft, wherein the fourth main shaft and the first main shaft are coaxially spaced apart, and the fourth main shaft is configured to be drivingly connected to a motor or engine; wherein the third gear train further includes at least one intermediate gear, and the intermediate gear of the third gear train is fixedly sleeved over the fourth main shaft.

In some embodiments, the gearbox further includes an telescopic shaft and a transmission cylinder, wherein the transmission cylinder has a closed end and an open end opposite to the closed end, the closed end is coaxially connected to one end of the telescopic shaft, and the other end of the telescopic shaft is coaxially connected to the fourth main shaft; wherein first gear teeth are circumferentially spaced apart on an outer circumferential wall of the transmission cylinder, second gear teeth are circumferentially spaced apart on an inner wall of the second hollow shaft, and an outer diameter of the transmission cylinder is smaller than an inner diameter of the second hollow shaft; and the telescopic shaft is configured to control the transmission cylinder to move to a first position or a second position, the transmission cylinder is inserted into the second hollow shaft in a case where the transmission cylinder is at the first position, and the first gear teeth are engaged with the second gear teeth, and the transmission cylinder is outside the second hollow shaft in a case where the transmission cylinder is at the second position.

In some embodiments, the gearbox further includes a shift lever and a drive member, wherein one end of the shift lever is connected to the drive member, and the drive member is configured to drive the shift lever to move along an axial direction of the telescopic shaft; wherein a positioning slider is disposed on the other end of the shift lever, an annular dovetail groove is disposed on the closed end, the annular dovetail groove is coaxial with a central axis of the transmission cylinder, and the positioning slider is slidably disposed in the annular dovetail groove.

In some embodiments, the telescopic shaft includes a first sub-shaft and a second sub-shaft that are coaxially sleeved, wherein a bore is disposed on an end surface of a first end of the second sub-shaft, a first end of the first sub-shaft is coaxially inserted into the bore, the first sub-shaft is circumferentially locked to the second sub-shaft, a second end of the first sub-shaft is connected to the closed end, and a second end of the second sub-shaft is connected to the fourth main shaft.

In a second aspect, embodiments of the present disclosure provide a hybrid power system. The hybrid power system includes an engine, a first motor, and the gearbox as described above; an output shaft of the engine is drivingly connected to a second connection portion of the first clutch assembly, a shaft of the first motor is coaxially connected to the first main shaft, and the first main shaft is coaxially connected to a first connection portion of the first clutch assembly.

In some embodiments, the hybrid power system further includes a power supply assembly, wherein the power supply assembly includes a battery and an inverter, wherein the inverter is connected to the battery, and the first motor is connected to the inverter.

In some embodiments, the hybrid power system further includes a differential, wherein the differential is drivingly connected to the second main shaft, and the differential is configured to be drivingly connected to wheels.

In a third aspect, embodiments of the present disclosure provide a vehicle. The vehicle includes a vehicle body and the hybrid power system as described above, wherein the hybrid power system is disposed in the vehicle body.

The technical solutions according to the embodiments of the present disclosure at least achieve the following beneficial effects.

In the gearbox according to the embodiments of the present disclosure, the first gear train is drivingly connected to the first main shaft via the first clutch assembly, thereby controlling whether the power of the engine is transmitted to the motor. In addition, the second gear train is drivingly connected to the first main shaft via the second clutch, thereby controlling whether the power of the motor is transmitted to the second main shaft to drive the wheels to rotate.

In the case that the pure power generation mode is required, the first clutch assembly is engaged, and the second clutch assembly is disengaged, such that the power of the engine is only transmitted to the motor, without being transmitted to the second main shaft and dragging other components, thereby reducing energy loss. In the case that the single-motor mode is required, the first clutch assembly is disengaged, and the second clutch assembly is engaged, such that the power of the motor is only transmitted to the second main shaft to drive the wheels, without being transmitted to the engine, thereby avoiding energy loss.

Additional aspects and advantages of the present disclosure are to be partially disclosed in the following description, partially become apparent from the following description, or be understood through the practice of the present disclosure.

### BRIEF DESCRIPTION OF THE DRAWINGS

For clearer descriptions of the technical solutions according to the embodiments of the present disclosure, the following briefly introduces the accompanying drawings required for describing the embodiments. Apparently, the accompanying drawings in the following description show merely some examples of the present disclosure, and those of ordinary skill in the art may still derive other drawings from these accompanying drawings without creative efforts.
FIG. 1 is a structural diagram of a hybrid power system according to some embodiments of the present disclosure;
FIG. 2 is a structural diagram of a gearbox according to some embodiments of the present disclosure;
FIG. 3 is a partial structural diagram of another gearbox according to some embodiments of the present disclosure;
FIG. 4 is a partial structural diagram of another gearbox according to some embodiments of the present disclosure;
FIG. 5 is an energy transmission diagram of a hybrid power system according to some embodiments of the present disclosure;
FIG. 6 is an energy transmission diagram of a hybrid power system according to some embodiments of the present disclosure;
FIG. 7 is an energy transmission diagram of a hybrid power system according to some embodiments of the present disclosure;
FIG. 8 is an energy transmission diagram of a hybrid power system according to some embodiments of the present disclosure;
FIG. 9 is an energy transmission diagram of a hybrid power system according to some embodiments of the present disclosure; and
FIG. 10 is an energy transmission diagram of a hybrid power system according to some embodiments of the present disclosure.

The symbols in the figures are illustrated as follows:
11-first main shaft; 12-second main shaft; 13-third main shaft; 14-fourth main shaft;
21-first clutch assembly;
211-first annular steel plate; 212-first clutch plate; 213-first clutch collar; 214-first hollow shaft;
22-second clutch assembly;
221-second annular steel plate; 222-second clutch plate; 223-second clutch collar; 224-second hollow shaft; 225-second gear teeth;
23-third clutch assembly;
231-third annular steel plate; 232-third clutch plate; 233-third clutch collar; 234-third hollow shaft;
31-first gear train; 32-second gear train; 33-third gear train;
41- telescopic shaft; 411-first sub-shaft; 412-second sub-shaft; 42-transmission cylinder;
420-annular dovetail groove; 421-first gear tooth; 43-shift lever; 431-positioning slider; 44-drive component;
51-engine; 52-first motor; 53-second motor;
60-power supply assembly; 61-battery; 62-inverter.

### DETAILED DESCRIPTION

Unless otherwise defined, the technical or scientific terms herein shall have the ordinary meaning understood by those skilled in the art to which this disclosure pertains. The terms "first," "second," "third," and similar terms in the specification and claims of this patent disclosure do not indicate any order, quantity, or importance, but are merely used to distinguish different components. Similarly, terms such as "one" or "a" do not imply a limitation on quantity but rather indicate the presence of at least one. Terms such as "including" or "comprising" indicate that the elements or objects listed before "including" or "comprising" encompass the elements or objects listed after 'including' or "comprising" and their equivalents, without excluding other elements or objects. "Connected" or "connected to" and similar terms are not limited to physical or mechanical connections but may include electrical connections, whether direct or indirect. "Above," "below," "left," "right," and similar terms are used solely to indicate relative positional relationships. When the absolute position of the described object changes, the relative positional relationships may also change accordingly.

For clearer descriptions of the objectives, technical solutions, and advantages of the present disclosure, the embodiments of the present disclosure are further described in detail below with reference to the accompanying drawings.

The following describes the embodiments of the present disclosure in detail. The examples of the embodiments are shown in the drawings, where the same or similar reference numerals throughout indicate the same or similar elements or elements having the same or similar functions. The embodiments described with reference to the drawings are exemplary and are intended to explain the present disclosure, and should not be construed as limiting the scope of the present disclosure.

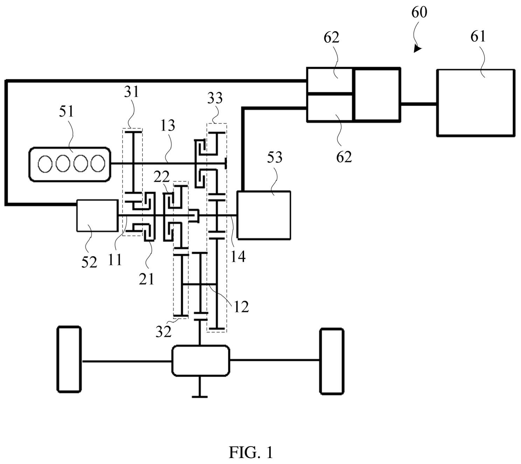

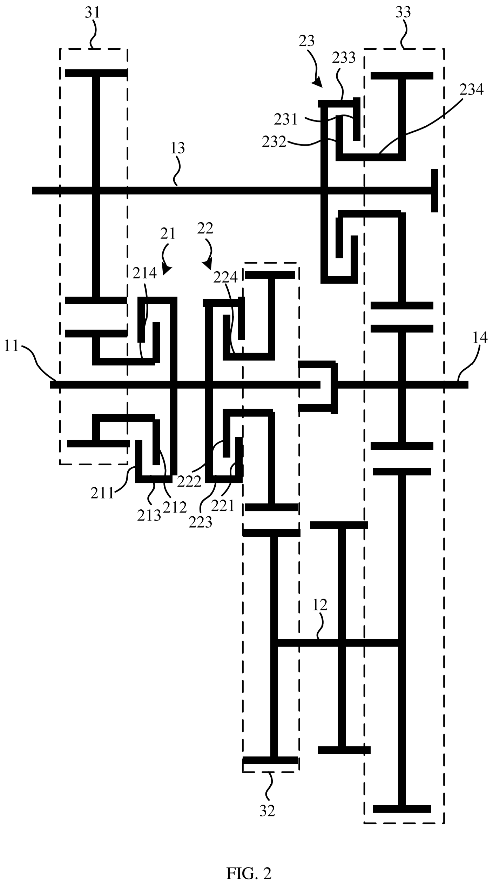

FIG. 1 is structural diagram of a hybrid power system according to some embodiments of the present disclosure. As shown in FIG. 1 and FIG. 2, the gearbox includes a first main shaft 11, a second main shaft 12, a first clutch assembly 21, and a second clutch assembly 22. The first main shaft 11 is parallel to the second main shaft 12. The first main shaft 11 is configured to be drivingly connected to the motor (first motor 52), and the second main shaft 12 is configured to be drivingly connected to the wheels. One end of the first gear train 31 is drivingly connected to the engine 51, and the other end is drivingly connected to the first main shaft 11 via the first clutch assembly 21. One end of the second gear train 32 is drivingly connected to the first main shaft 11 via the second clutch assembly 22, and the other end is drivingly connected to the second main shaft 12.

In the gearbox according to some embodiments of the present disclosure, the first gear train 31 is drivingly connected to the first main shaft 11 via the first clutch assembly 21, thereby controlling whether the power of the engine 51 is transmitted to the motor (first motor 52). In addition, the second gear train 32 is drivingly connected to the first main shaft 11 via the second clutch 22, thereby controlling whether the power of the motor (first motor 52) is transmitted to the second main shaft 12 to drive the wheels to rotate.

In the case that the pure power generation mode is required, the first clutch assembly 21 is engaged, and the second clutch assembly 22 is disengaged, such that the power of the engine is only transmitted to the motor (first motor 52), without being transmitted to the second main shaft 12 and dragging other components, thereby reducing energy loss. In the case that the single-motor mode is required, the first clutch assembly 21 is disengaged, and the second clutch assembly 22 is engaged, such that the power of the motor (first motor 52) is only transmitted to the second main shaft 12 to drive the wheels, without being transmitted to the engine 51, thereby avoiding energy loss.

As shown in FIG. 2, the first clutch assembly 21 includes a first annular steel plate 211, a first clutch plate 212, a first clutch collar 213, and a first hollow shaft 214. The outer circumferential wall of the first annular steel plate 211 is connected to the inner wall of the first clutch collar 213. The first clutch plate 212 is axially movably sleeved over the first hollow shaft 214, and the first clutch plate 212 is circumferentially locked to the first hollow shaft 214. The first hollow shaft 214 is movably sleeved over the first main shaft 11. The first clutch collar 213 is coaxially connected to the first main shaft 11. The input gear of the first gear train 31 is coaxially connected to the output shaft of the engine 51. The output gear of the first gear train 31 is fixedly sleeved over the first hollow shaft 214.

As shown in FIG. 2, the second clutch assembly 22 includes a second annular steel plate 221, a second clutch plate 222, a second clutch collar 223, and a second hollow shaft 224, The outer circumferential wall of the second annular steel plate 221 is connected to the inner wall of the second clutch collar 223. The second clutch plate 222 is axially movably sleeved over the second hollow shaft 224, and the second clutch plate 222 is circumferentially locked to the second hollow shaft 224. The second hollow shaft 224 is movably sleeved over the first main shaft 11. The second clutch collar 223 is coaxially connected to the first main shaft 11. The input gear of the second gear train 32 is fixedly sleeved over the second hollow shaft 224. The output gear of the second gear train 32 is fixedly sleeved over the second main shaft 12.

In the gearbox according to some embodiments of the present disclosure, the first clutch collar 213 of the first clutch assembly 21 is connected to the first main shaft 11, and the first hollow shaft of the first clutch assembly 21 is connected to the engine via the first gear train 31, such that the first clutch assembly 21 controls whether the power of the engine 51 is transmitted to the motor (first motor 52). In addition, the second clutch collar of the second clutch assembly 22 is connected to the first main shaft 11, and the second hollow shaft of the second clutch assembly 22 is connected to the second main shaft 12 via the second gear train 32, such that the second clutch assembly 22 controls whether the power of the motor (first motor 52) is transmitted to the second main shaft 12 to drive the wheels.

In the case that the pure power generation mode is required, the first annular steel plate 211 and the first clutch plate 212 of the first clutch assembly 21 are engaged, and the second annular steel plate 211 and the second clutch plate 212 of the second clutch assembly 22 are disengaged, such that the power of the engine is only transmitted to the motor (first motor 52) without the second main shaft 12, thereby reducing energy loss. In the case that the single-motor mode is required, the first annular steel plate 211 and the first clutch plate 212 of the first clutch assembly 21 are disengaged, and the second annular steel plate 221 and the second clutch plate 222 of the second clutch assembly 22 are engaged, such that the power of the motor (first motor 52) is only transmitted to the second main shaft 12 to drive the wheels, and not transmitted to the engine 51, thereby avoiding energy loss.

For example, an axially extending groove is disposed on the inner wall of the first clutch collar 213, and a protrusion is disposed on the outer circumferential wall of the first annular steel plate 211. The protrusion can slide axially along the first clutch collar 213 within the groove, thereby achieving circumferential locking of the annular steel plate upon being installed on the first clutch collar 213.

For example, an axially extending groove is disposed on the outer wall of the first hollow shaft 214, and a protrusion is disposed on the inner hole wall of the first clutch plate 212. The protrusion can slide axially along the first hollow shaft 214 within the groove, such that the first clutch plate 212 is circumferentially locked to the first hollow shaft 214.

In the case that the first clutch assembly 21 needs to be engaged, the drive device controls the first annular steel plate 211 to be in contact with the first clutch plate 212, thereby establishing a power transmission connection between the first hollow shaft 214 and the first clutch collar 213.

In the embodiments of the present disclosure, the first gear train 31 includes at least an input gear and an output gear, and the input gear is driving connected to output gear, such that the power is transmitted from the input gear to the output gear.

In some embodiments, in the first gear train 31, the input gear and output gear are directly engaged, or at least one connection gear is disposed between the input gear and output gear.

It should be noted that the specific number of gears in the first gear train 31 is determined based on actual requirements.

For example, a protrusion is disposed on the outer circumferential wall of the second annular steel plate 221, the protrusion can slide axially along the inner wall of the second clutch collar within the groove, thereby achieving circumferential locking of the second annular steel plate 221 upon being installed on the second clutch collar .

For example, an axially extending groove is disposed on the outer wall of the second hollow shaft 224, and a protrusion is disposed on the inner hole wall of the second clutch plate 222, and the protrusion can slide axially along the second hollow shaft 224 within the groove, such that the second clutch plate 222 is circumferentially locked to the second hollow shaft 224.

In the case that the second clutch assembly needs to be engaged, the drive device controls the second annular steel plate 221 to be in contact with the second clutch plate 222, thereby establishing a power transmission connection between the second hollow shaft 224 and the second clutch collar .

In the embodiments of the present disclosure, the second gear train 32 includes at least an input gear and an output gear, and the input gear is drivingly connected to output gear, such that the power is transmitted from the input gear to the output gear.

In some embodiments, in the second gear train 32, the input gear and output gear are directly engaged, or at least one connection gear is disposed between the input gear and output gear.

It should be noted that the specific number of gears in the second gear train 32 is determined based on actual requirements.

In some embodiments, as shown in FIG. 1 and FIG. 2, the gearbox further includes a third main shaft 13, a third clutch assembly 23, and a third gear train 33, wherein the third main shaft 13 is parallel to the first main shaft 11.

As shown in FIG. 1, the third clutch assembly 23 includes a third annular steel plate 231, a third clutch plate 232, a third clutch collar 233, and a third hollow shaft 234. The outer circumferential wall of the third annular steel plate 231 is connected to the inner wall of the third clutch collar 233. The third clutch plate 232 is axially movably sleeved over the third hollow shaft 234, and the third clutch plate 232 is circumferentially locked to the third hollow shaft 234. The third hollow shaft 234 is movably sleeved over the third main shaft 13. The third clutch collar 233 is coaxially connected to the third main shaft 13. The input gear of the third gear train 33 is fixedly sleeved over the third hollow shaft 234.

For example, a protrusion is disposed on the outer circumferential wall of the third annular steel plate 231, and the protrusion can slide axially along the inner wall of the third clutch collar 233 within the groove, thereby achieving circumferential locking of the third annular steel plate 231 upon being installed on the third clutch collar 233.

For example, an axially extending groove is disposed on the outer wall of the third hollow shaft 234, a protrusion is disposed on the inner hole wall of the third clutch plate 232, and the protrusion can slide axially along the third hollow shaft 234 within the groove, such that the third clutch plate 232 is circumferentially locked to the third hollow shaft 234.

In the case that the third clutch assembly 23 is engaged, the drive device controls the third annular steel plate 231 to be in contact with the third clutch plate 232, thereby establishing a power transmission connection between the third hollow shaft 234 and the third clutch collar 233.

In the above embodiments, the third main shaft 13 is connected to the input gear of the third gear train 33 via the third clutch assembly 23, and the third main shaft 13 is configured to be drivingly connected to the engine 51, such that the third clutch assembly 23 controls whether the power of the engine 51 is transmitted to the wheels via the third main shaft 13 and the third gear train 33.

In the case that engine 51 is required to drive, the first annular steel plate 211 and the first clutch plate 212 of the first clutch assembly 21 are disengaged, and the third annular steel plate 231 and the third clutch plate 232 of the third clutch assembly 23 are engaged, such that the power of engine 51 is transmitted to the second main shaft 12 only through the third gear train 33, thereby achieving the first gear mode of the engine 51. In addition, the first annular steel plate and the first clutch plate of the first clutch assembly 21 are engaged, and the second annular steel plate and the second clutch plate of the second clutch assembly 22 are engaged, such that the power of the engine 51 is transmitted through the second gear train 32 to the second main shaft 12, thereby achieving the second gear mode of the engine 51.

In the embodiments of the present disclosure, the third gear train 33 includes at least an input gear and an output gear, and the input gear is driving connected to the output gear, such that the power is transmitted from the input gear to the output gear.

In some embodiments, in the third gear train 33, the input gear and output gear are directly engaged, or at least one connection gear is disposed between the input gear and output gear.

It should be noted that the specific number of gears in the third gear train 33 is determined based on actual requirements.

In some embodiments, as shown in FIG. 1 and FIG. 2, the gearbox further includes a fourth main shaft 14, and the fourth main shaft 14 is coaxially spaced apart from the first main shaft 11. The fourth main shaft 14 is configured to be drivingly connected to the motor (second motor 53) or engine 51.

As shown in FIG. 1 and FIG. 2, the third gear train 33 further includes at least one intermediate gear, and the intermediate gear of the third gear train 33 is fixedly sleeved over the outside of the fourth main shaft 14.

The fourth main shaft 14 is installed on the intermediate gear of the third gear train 33, and the power source is drivingly connected to the fourth main shaft 14, such that the power of the power source is transmitted through the fourth main shaft 14 and the third gear train 33 to the second main shaft 12, thereby enhancing the power performance of the hybrid power system.

For example, the power source of the fourth main shaft 14 is an electric motor (second motor 53) or an engine 51, which is not limited in the present disclosure.

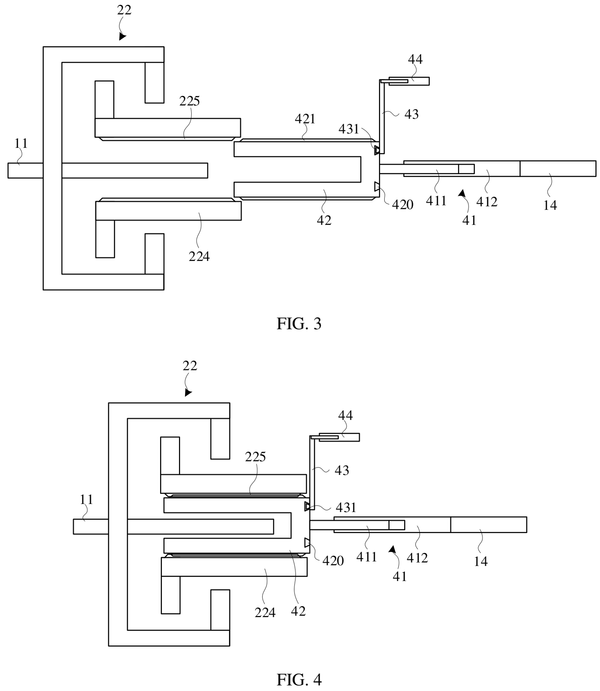

FIG. 3 is a partial structural diagram of another gearbox according to some embodiments of the present disclosure. As shown in FIG. 3, the gearbox further includes an extensible shaft 41 and a transmission cylinder 42. The transmission cylinder 42 has a closed end and an open end opposite to the closed end, the closed end is coaxially connected to one end of the extensible shaft 41, and the other end of the extensible shaft 41 is coaxially connected to the fourth main shaft 14.

As shown in FIG. 3, first gear teeth 421 are circumferentially spaced apart on the outer circumferential wall of the transmission cylinder 42, and second gear teeth 225 are circumferentially spaced apart on the inner surface of the second hollow shaft 224. The outer diameter of the transmission cylinder 42 is smaller than the inner diameter of the second hollow shaft 224.

As shown in FIGS. 3 and 4, the telescopic shaft 41 is configured to control the transmission cylinder 42 to move to the first position or the second position. In the case that the transmission cylinder 42 is at the first position, the transmission cylinder 42 is inserted into the second hollow shaft 224, and the first gear teeth 421 are engaged with the second gear teeth 225.

In the embodiments of the present disclosure, as shown in FIG. 3, in the case that the transmission cylinder 42 is at the second position, the transmission cylinder 42 is outside the second hollow shaft 224. In the case that the first motor 52 rotates, the power of the first motor 52 is transmitted sequentially through the first main shaft 11 and the second gear train 32 to the second main shaft 12. In the case that the second motor 53 rotates, the power of the second motor 53 is transmitted sequentially through the fourth main shaft 14 and the third gear train 33 to the second main shaft 12.

In the embodiments of the present disclosure, as shown in FIG. 4, in the case that the transmission cylinder 42 is switched to the first position, the transmission cylinder 42 is inserted into the second hollow shaft 224, and the first gear teeth 421 on the outer wall of the transmission cylinder 42 are engaged with the second gear teeth 225 inside the second hollow shaft 224, thereby circumferentially locking the transmission cylinder 42 and the second hollow shaft 224, such that the transmission cylinder 42 and the second hollow shaft 224 rotate together. When the first motor 52 rotates, in the case that the second clutch assembly 22 is engaged, the power of the first motor 52 is transmitted sequentially through the first main shaft 11, the second clutch assembly 22, the second hollow shaft 224, the fourth main shaft 14, and the third gear train 33 to the second main shaft 12. When the second motor 53 rotates, in the case that the second clutch assembly 22 is not engaged, the power of the second motor 53 is transmitted to the second main shaft 12 through the fourth main shaft 14, the second hollow shaft 224, and the second gear train 32.

In this way, the power of the motor is transmitted to the second main shaft 12 via the second gear train 32 and the third gear train 33, such that the motor operates in a plurality of shifting mode.

In some embodiments, as shown in FIG. 3, the gearbox further includes a shift lever 43 and a drive member 44. One end of the shift lever 43 is connected to the drive member 44, and the drive member 44 is configured to drive the shift lever 43 to move axially along the telescopic shaft 41.

As shown in FIG. 3, a positioning slider 431 is disposed on the other end of the shift lever 43 , and a annular dovetail groove 420 is disposed on the closed end. The annular dovetail groove 420 is coaxial with the central axis of the transmission cylinder 42, and the positioning slider 431 is slidably disposed in the annular dovetail groove 420.

By installing a dovetail positioning slider 431 at one end of the lever 43 and the annular dovetail groove 420 at the closed end, in the case that the positioning slider 430 is installed in the annular dovetail groove 420, when the transmission cylinder 42 rotates, the positioning slider 431 can slide within the annular dovetail groove 420, such that the transmission cylinder 42 transmits power to the second hollow shaft 224.

In the embodiments of the present disclosure, the lever 43 is connected to a drive member. For example, the drive member 44 includes an electric telescopic rod, one end of which is connected to one end of the lever. This allows the electric telescopic rod to control the extension and retraction of the transmission cylinder, enabling the transmission cylinder 42 to switch between the first position and the second position.

In some embodiments, as shown in FIG. 3, the telescopic shaft 41 includes a first sub-shaft 411 and a second sub-shaft 412 that are coaxially sleeved, a bore is disposed on the end face of the first end of the second sub-shaft 412, the first end of the first sub-shaft 411 is coaxially inserted into the bore, and the first sub-shaft 411 is circumferentially locked to the second sub-shaft 412. The second end of the first sub-shaft 411 is connected to the closed end, and the second end of the second sub-shaft 412 is connected to the fourth main shaft 14.

In the above embodiments, the extending function of the telescopic shaft 41 is achieved by the two assembled sub-shafts, thereby enabling the transmission cylinder to be inserted and fitted with the second hollow shaft.

For example, an inner flange is disposed at the opening position of the bore, and the inner flange can prevent the first sub-shaft from slipping out of the bore of the second sub-shaft, thereby enhancing the reliability of the telescopic shaft.

FIG. 1 is a schematic diagram of a hybrid power system according to some embodiments of the present disclosure. As shown in FIG. 1, the hybrid power system includes an engine 51, a first motor 52, and the gearbox as described above.

The output shaft of the engine 51 is drivingly connected to the second connection portion of the first clutch assembly 21. The shaft of the first motor 52 is coaxially connected to the first main shaft 11, and the first main shaft 11 is coaxially connected to the first connection portion of the first clutch assembly 21.

As shown in FIG. 1, the output shaft of the engine 51 is coaxially connected to the third main shaft 13, and the third main shaft 13 is connected to the first hollow shaft 214 of the first clutch assembly 21 via the first gear train 31, such that the power of the engine 51 is transmitted to the first clutch assembly 21.

In the above embodiments, the power of the engine 51 is transmitted to the first main shaft 11 via the first clutch assembly 21, such that the power of the engine 51 is used to drive the first motor 52 for power generation, or the power of the engine 51 is transmitted to the second main shaft 12 to drive the wheels to rotate.

In the case that the first motor 52 needs to generate electricity, the first connection portion and the second connection portion of the first clutch assembly 21 are engaged, and the first connection portion and the second connection portion of the second clutch assembly 22 are disengaged. In this way, the power of the engine 51 is only transmitted to the motor and is not transmitted to the second main shaft 12 to drag other components to rotate, thereby reducing energy loss. In the case that only the first motor 52 needs to operate, the first connection portion and the second connection portion of the first clutch assembly 21 are disengaged, and the first connection portion and the second connection portion of the second clutch assembly 22 are engaged, such that the power of the motor is transmitted only to the second main shaft 12 to drive the wheels, without being transmitted to the engine 51, thereby avoiding energy loss.

In some embodiments, as shown in FIG. 1, the hybrid system further includes a second motor 53, and the shaft of the second motor 53 is connected coaxially with the fourth main shaft 14, such that the power of the second motor 53 is transmitted to the second main shaft 12 through the fourth main shaft 14 and the third gear train 33 to drive the wheels to rotate.

In this way, the second motor 53 acts as a drive motor, and can output power to drive the car and improve the power performance of the hybrid system.

In some embodiments, as shown in FIG. 1, the hybrid system further includes a differential, and the differential is connected to the second main shaft 12.

The differential causes the wheels connected to the output shaft of the differential to rotate at different speeds. In the case that the vehicle turns, the turning radius of the inner wheels is different from the turning radius of the outer wheels, and the outer wheels has a larger turning radius than the inner wheels. In this way, the outer wheels need to rotate at a higher speed than the inner wheels during when turning. The differential causes the two wheels to rotate at different speeds, thereby achieving the speed difference between the two wheels.

In some embodiments, the hybrid power system further includes a power supply assembly 60, and the power supply assembly 60 includes a battery 61 and an inverter 62. The inverter 62 is connected to the battery 61, and the first motor 52 and the second motor 53 are connected to the inverter 62.

For example, the power supply component 60 includes two inverters 62, and the inverter 62 is connected to the battery 61. The first motor 52 is connected to one of the two inverters 62, and the second motor 53 is connected to the other inverter 62.

By configuring two inverters 62, the battery 61 is connected to the first motor 52 via one inverter 62, and the battery 61 is connected to the second motor 53 via the other inverter 62. The battery 61 is a rechargeable battery 61, and the inverter 62 is disposed on the output circuit of the battery 61 to convert the DC power output from the battery 61 into three-phase AC power to drive either the first motor 52 or the second motor 53.

Taking the hybrid system shown in FIG. 1 as an example, various power modes of the hybrid system are explained as follows.

In the case that the hybrid system is in pure electric mode, the hybrid system includes the following situations.

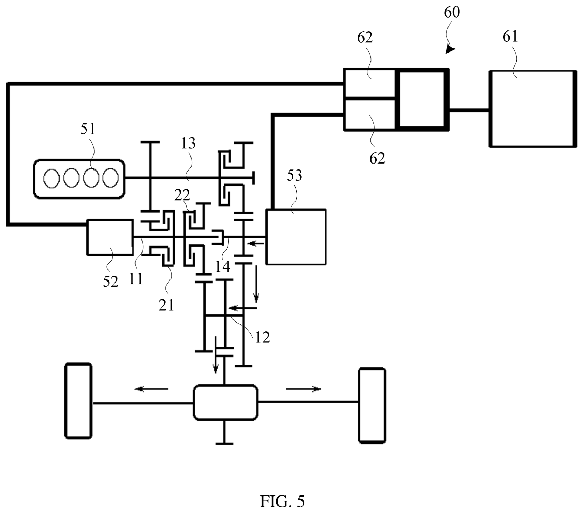

The first mode is shown in FIG. 5. The engine 51 and the first motor 52 do not operate, and the first clutch assembly 21, the second clutch assembly 22, and the third clutch assembly 23 are all disengaged, and the vehicle is driven by the second motor 53. The second motor 53 converts electrical energy into mechanical energy, which is transmitted to the fourth main shaft 14, the third gear train 33, and the second main shaft 12, and then transmitted to the wheels via the differential, such that the second motor 53 drives the vehicle.

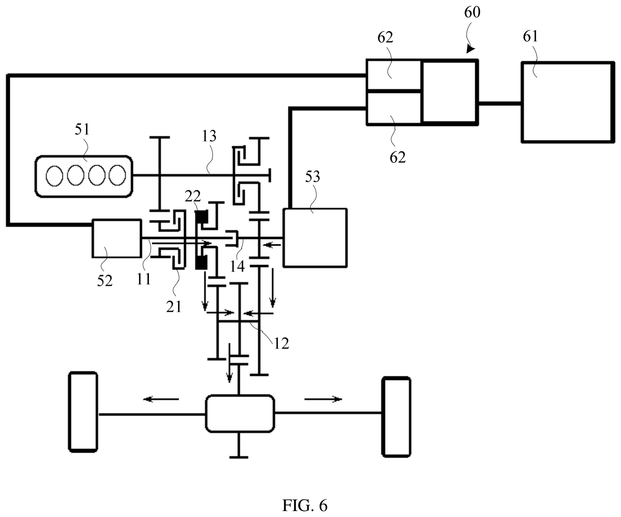

The second mode is shown in FIG. 6. the engine 51 do not operate, the first clutch assembly 21 and third clutch assembly 23 are disengaged, and the second clutch assembly 22 is engaged. The vehicle is driven by the first motor 52 and second motor 53, thereby achieving dual-motor drive of the vehicle.

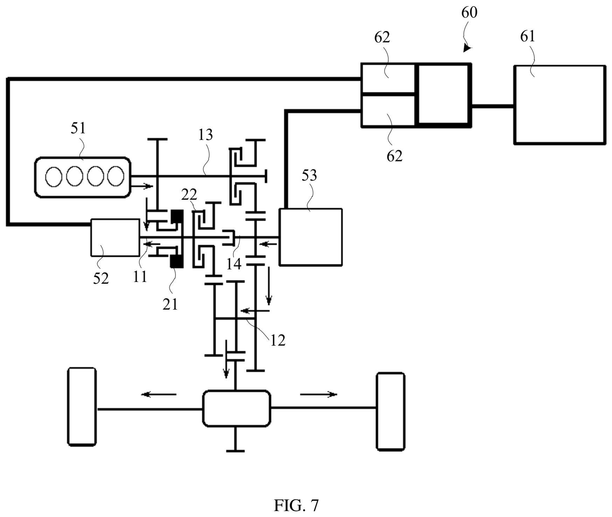

In the case that the hybrid system is in series hybrid drive mode, as shown in FIG. 7, the engine 51, first motor 52, and second motor 53 operate in coordination to jointly drive the vehicle. In this mode, the first clutch assembly 21 is engaged, and the second clutch assembly 22 and the third clutch assembly 23 are disengaged. The engine 51 operates in the high-efficiency state to drive the first motor 52 to generate electricity, which is supplied to the second motor 53 to drive the vehicle. Excess electricity is stored in the power supply assembly 60, and in the case that the power generation is insufficient, the power supply assembly 60 supplements the power.

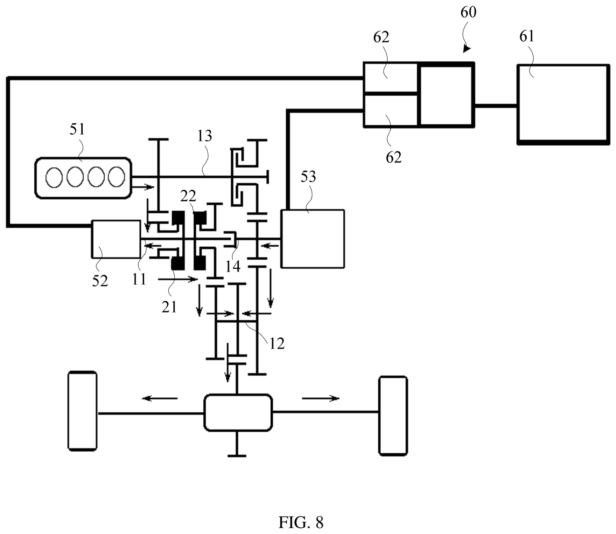

In the case that the hybrid power system is in parallel hybrid drive mode, as shown in FIG. 8, the vehicle operates in parallel first gear hybrid drive mode. The engine 51, the first motor 52, and the second motor 53 operate to drive the vehicle, which can output greater power and improve the overall vehicle performance. In this mode, the first clutch assembly 21 and second clutch assembly 22 are engaged, and the third clutch assembly 23 is disengaged. The engine 51 and the first motor 52 drive second shaft 12 via first main shaft 11, and second motor 53 drives second shaft 12 via fourth main shaft 14.

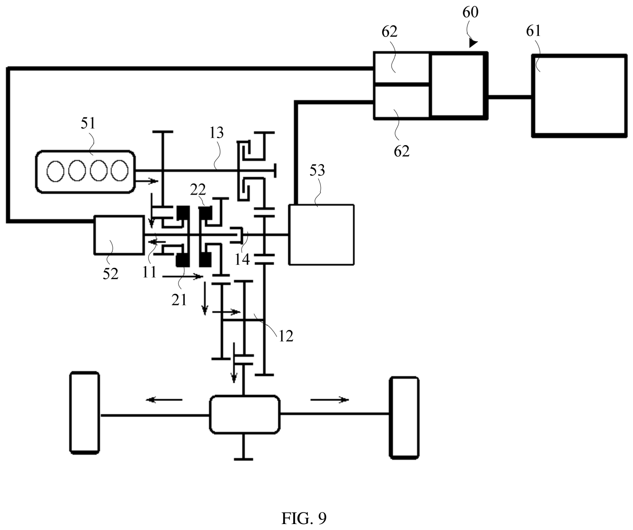

In the case that the hybrid system is in engine 51 direct drive mode, as shown in FIG. 9, the vehicle operates in engine first gear direct drive mode. Different combinations of the three clutch assemblies enable different operating modes. In one mode, the first clutch assembly 21 and the second clutch assembly 22 are engaged, and the third clutch assembly 23 is disengaged. A portion of the power of the engine drives the first motor 52 to generate electricity, and the other portion of the power is transmitted through the second gear train 32 to the second main shaft 12, which drives the wheels to rotate.

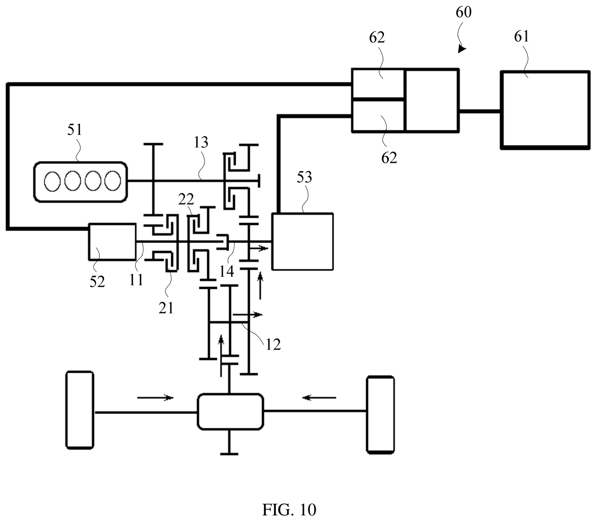

In the case that the hybrid system is in energy recovery mode, as shown in FIG. 10, the vehicle is coasting or braking, and the hybrid system provides a reverse torque to the vehicle, converting part of the vehicle's kinetic energy into electrical energy via the first motor 52 or the second motor 53, which is stored in the power supply component 60 for future use.

The present disclosure provides a vehicle including a vehicle body and the above hybrid power system, and the hybrid power system is disposed within the vehicle body.

The above description is only an optional embodiment of the present disclosure and is not intended to limit the scope of the present disclosure. Any modifications, equivalent replacements, improvements, or the like made within the principles of the present disclosure shall be included within the scope of protection of the present disclosure.

## Claims

1. A gearbox, comprising: a first main shaft (11), a second main shaft (12), a first clutch assembly (21), a second clutch assembly (22), a first gear train (31), and a second gear train (32); wherein
the first main shaft (11) is parallel to the second main shaft (12), the first main shaft (11) is configured to be drivingly connected to a motor, and the second main shaft (12) is configured to be drivingly connected to wheels;
one end of the first gear train (31) is drivingly connected to an engine, and the other end of the first gear train (31) is drivingly connected to the first main shaft (11) via the first clutch assembly (21); and
one end of the second gear train (32) is drivingly connected to the first main shaft (11) via the second clutch assembly (22), and the other end of the second gear train (32) is drivingly connected to the second main shaft (12).

2. The gearbox according to claim 1, wherein
the first clutch assembly (21) comprises a first annular steel plate (211), a first clutch plate (212), a first clutch collar (213), and a first hollow shaft (214), wherein an outer circumferential wall of the first annular steel plate (211) is connected to an inner wall of the first clutch collar (213), the first clutch plate (212) is axially movably sleeved over the first hollow shaft (214), the first clutch plate (212) is circumferentially locked to the first hollow shaft (214), the first hollow shaft (214) is movably sleeved over the first main shaft (11), the first clutch collar (213) is coaxially connected to the first main shaft (11), an input gear of the first gear train (31) is configured to be coaxially connected to an output shaft of an engine (51), and an output gear of the first gear train (31) is fixedly sleeved over the first hollow shaft (214); and
the second clutch assembly (22) comprises a second annular steel plate (221), a second clutch plate (222), a second clutch collar (223), and a second hollow shaft (224), wherein an outer circumferential wall of the second annular steel plate (221) is connected to an inner wall of the second clutch collar (223), the second clutch plate (222) is axially movably sleeved over the second hollow shaft (224), the second clutch plate (222) is circumferentially locked to the second hollow shaft (224), the second hollow shaft (224) is movably sleeved over the first main shaft (11), the second clutch collar (223) is coaxially connected to the first main shaft (11), an input gear of the second gear train (32) is fixedly sleeved over the second hollow shaft (224), and an output gear of the second gear train (32) is fixedly sleeved over the second main shaft (12).

3. The gearbox according to claim 2, further comprising a third main shaft (13), a third clutch assembly (23), and a third gear train (33), the third main shaft (13) being parallel to the first main shaft (11);
wherein the third clutch assembly (23) comprises a third annular steel plate (231), a third clutch plate (232), a third clutch collar (233), and a third hollow shaft (234), wherein an outer circumferential wall of the third annular steel plate (231) is connected to an inner wall of the third clutch collar (233), the third clutch plate (232) is axially movably sleeved over the third hollow shaft (234), the third clutch plate (232) is circumferentially locked to the third hollow shaft (234), the third hollow shaft (234) is movably sleeved over the third main shaft (13), the third clutch collar (233) is coaxially connected to the third main shaft (13), an input gear of the third gear train (33) is fixedly sleeved over the third hollow shaft (234), and an output gear of the third gear train (33) is fixedly sleeved over the second main shaft (12).

4. The gearbox according to claim 3, further comprising: a fourth main shaft (14), wherein the fourth main shaft (14) and the first main shaft (11) are coaxially spaced apart, and the fourth main shaft (14) is configured to be drivingly connected to a motor or engine;
wherein the third gear train (33) further comprises at least one intermediate gear, wherein the intermediate gear of the third gear train (33) is fixedly sleeved over the fourth main shaft (14).

5. The gearbox according to claim 4, further comprising: a telescopic shaft (41) and a transmission cylinder (42), wherein the transmission cylinder (42) has a closed end and an open end opposite to the closed end, wherein the closed end is coaxially connected to one end of the telescopic shaft (41), and the other end of the telescopic shaft (41) is coaxially connected to the fourth main shaft (14); wherein
first gear teeth (421) are circumferentially spaced apart on an outer circumferential wall of the transmission cylinder (42), second gear teeth (225) are circumferentially spaced apart on an inner wall of the second hollow shaft (224), and an outer diameter of the transmission cylinder (42) is less than an inner diameter of the second hollow shaft (224); and
the telescopic shaft (41) is configured to control the transmission cylinder (42) to move to a first position or a second position, the transmission cylinder (42) is inserted into the second hollow shaft (224) and the first gear teeth (421) are engaged with the second gear teeth (225) in a case where the transmission cylinder (42) is at the first position, and the transmission cylinder (42) is outside the second hollow shaft (224) in a case where the transmission cylinder (42) is at the second position.

6. The gearbox according to claim 5, further comprising: a shift lever (43) and a drive member (44), wherein one end of the shift lever (43) is connected to the drive member (44), and the drive member (44) is configured to drive the shift lever (43) to move along an axial direction of the telescopic shaft (41);
wherein a positioning slider (431) is disposed on the other end of the shift lever (43), an annular dovetail groove (420) is disposed on the closed end, the annular dovetail groove (420) is coaxial with a central axis of the transmission cylinder (42), and the positioning slider (431) is slidably disposed in the annular dovetail groove (420).

7. The gearbox according to claim 5, wherein the telescopic shaft (41) comprises a first sub-shaft (411) and a second sub-shaft (412) that are coaxially sleeved, wherein a bore is defined in an end surface of a first end of the second sub-shaft (412), a first end of the first sub-shaft (411) is coaxially inserted into the bore, the first sub-shaft (411) is circumferentially locked to the second sub-shaft (412), a second end of the first sub-shaft (411) is connected to the closed end, and a second end of the second sub-shaft (412) is connected to the fourth main shaft (14).

8. A hybrid power system, comprising: an engine (51), a first motor (52), and the gearbox as defined in any one of claims 1 to 6;
wherein an output shaft of the engine (51) is drivingly connected to a second connection portion of the first clutch assembly (21), a shaft of the first motor (52) is coaxially connected to the first main shaft (11), and the first main shaft (11) is coaxially connected to a first connection portion of the first clutch assembly (21).

9. The hybrid power system according to claim 8, further comprising: a power supply assembly (60), wherein the power supply assembly (60) comprises a battery (61) and an inverter (62), wherein the inverter (62) is connected to the battery (61), and the first motor (52) is connected to the inverter (62).

10. The hybrid power system according to claim 8 or 9, further comprising: a differential, wherein the differential is drivingly connected to the second main shaft (12), and the differential is configured to be drivingly connected to wheels.

11. A vehicle, comprising a vehicle body and the hybrid power system as defined in any one of claims 7 to 9, wherein the hybrid power system is disposed in the vehicle body.
